# EUROPEAN PATENT SPECIFICATION

(11) **EP 2 066 096 B1**
(45) Date of publication and mention of the grant of the patent: **03.07.2013**
(21) Application number: 08170021.3
(22) Date of filing: 26.11.2008
(51) Int. Cl.: H04L 29/08

(54) **Apparatus and method facilitating web service communications between networks**
Vorrichtung und Verfahren, die Webdienstkommunikationen zwischen Netzen erleichtern
Appareil et procédé facilitant les communications de services Internet entre plusieurs réseaux

(30) Priority: 27.11.2007 US 954558
(43) Date of publication of application: 03.06.2009
(73) Proprietor: The Boeing Company, Chicago, IL 60606-2016 (US)
(72) Inventor: Winig, Robert J., Rancho Palos Verdes, CA 90275 (US); Murphy, Michael John, Newport Beach, CA 92657 (US); Johnson, Charles E., El Segundo, CA 90245 (US)
(74) Representative: Howson, Richard G.B.

(56) References cited:
- US-A- 5 778 228
- US-A1- 2005 091 362
- US-A1- 2005 097 178
- US-B1- 6 230 160

## Description

### BACKGROUND

Network communications such as, by way of example and not by way of limitation, communications supporting Internet web services, have recently become generally ubiquitous. However, not all networks employ the same communications protocol or other protocols to effect communications. As a consequence communications between selected entities may not be carried out using some networks.

United States Patent application US2005/0091362 A1 discloses an information providing system capable of making applications built on environments with respective different protocols (SIP and HTTP), which cooperate with each other to operate applications on a real time basis. The system uses cooperation managers in both SIP and web systems to process information of the SIP and HTTP protocols with SOAP/CORBA and the like as a communication protocol that can be handled in common.

By way of example and not by way of limitation, web service access by client applications may typically be effected using Simple Object Access Protocol (SOAP) messages that use Hypertext Transfer Protocol (HTTP). However, it is not uncommon to encounter a network environment that does not handle HTTP throughout. In such network environments a message protocol translation may be required in order to support trans-network communications.

There is a need for an apparatus, as disclosed in claim 1, and method, as disclosed in claim 8, facilitating communications between entities via a network.

### SUMMARY

An apparatus facilitates communications between first and second entities via a network. The first entity cooperates with a first interface unit to communicate via the network using a first protocol. The second entity cooperates with a second interface unit to communicate via the network using a second protocol. The network does not support communications using at least one of the first and second protocols. The apparatus includes: (a) a first converter coupled with the first entity for emulating the cooperative relation between the second entity and the second interface unit to convert communications from the first entity into a common protocol; and (b) a second converter coupled with the second entity for emulating the cooperative relation between the first entity and the first interface unit to convert communications from the second entity into the common protocol. The first and second converters communicate via the network using the common protocol.

A method facilitates communications between a first entity and a second entity via a common network. The first entity cooperates with a first interface unit to effect communication with the common network using a first communication protocol. The second entity cooperates with a second interface unit to effect communication with the common network using a second communication protocol. The common network does not support communications carried out using at least one of the first communication protocol and the second communication protocol. The method includes: (a) in no particular order: (1) providing a first converting element coupled with the first entity; the first converting element being configured for generally emulating the cooperative relation between the second entity and the second interface unit; and (2) providing a second converting element coupled with the second entity; the second converting element being configured for generally emulating the cooperative relation between the first entity and the first interface unit; (b) in no particular order: (1) effecting conversion of communications from the first entity into a common communication protocol; and (2) effecting conversion of communications from the second entity into the common communication protocol; and (c) effecting communication between the first converting element and the second converting element via the common network using the common communication protocol.

It is, therefore, a feature of the present disclosure to provide an apparatus and method facilitating communications between entities via a network.

Further features of the present disclosure will be apparent from the following specification and claims when considered in connection with the accompanying drawings, in which like elements are labeled using like reference numerals in the various figures, illustrating embodiments of the disclosure.

### BRIEF DESCRIPTION OF THE DRAWINGS

FIG. 1 is a schematic diagram of a prior art arrangement for communication between a client application and a web service via a network.
FIG. 2 is a schematic diagram of an arrangement for communication between a client application and a web service via a network using the apparatus of the present disclosure.
FIG. 3 is a flow chart illustrating the method of the present disclosure.

### DETAILED DESCRIPTION

The terms "coupled" and "connected", along with their derivatives, may be used. It should be understood that these terms are not intended as synonyms for each other. Rather, in particular embodiments, "connected" may be used to indicate that two or more elements are in direct physical or electrical contact with each other. "Coupled" may be used to indicated that two or more elements are in either direct or indirect (with other intervening elements between them) physical or electrical contact with each other, or that the two or more elements co-operate or interact with each other (e.g. as in a cause an effect relationship).

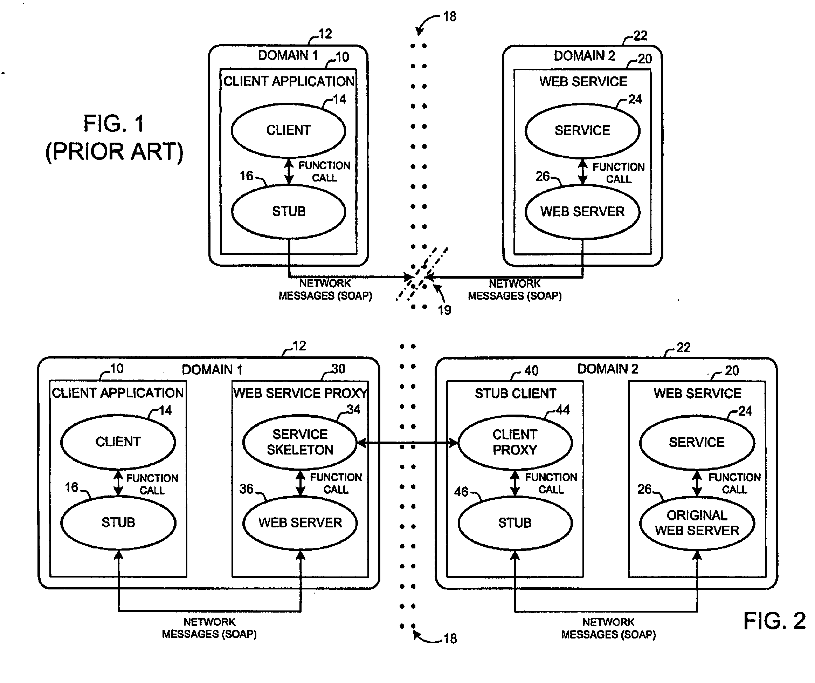

FIG. 1 is a schematic diagram of a prior art arrangement for communication between a client application and a web service via a network. In FIG. 1, a client application 10 may be situated in a first domain 12. Client application 10 may include a first entity embodied in a client unit 14 in communicative relation with a client stub 16. For purposes of this description, a "stub" component may be regarded as a limited-capability unit configured for limited communications. Client stub 16 may therefore operate as a first interface unit for client unit 14 to effect communications using a first communication protocol. By way of example and not by way of limitation, client stub 16 may communicate with client unit 14 using function calls, and client stub 16 may communicate with entities external of first domain 12 using Simple Object Access Protocol (SOAP) messages.

A web service 20 may be situated in a second domain 22. Web service 20 may include a second entity embodied in a web service 24 in communicative relation with a web server 26. Web server 26 may operate as a second interface unit for web service 24 to effect communications using a second communication protocol. By way of example and not by way of limitation, web server 26 may communicate with web service 24 using function calls, and web server 26 may communicate with entities external of second domain 22 using Simple Object Access Protocol (SOAP) messages.

Communications by client stub 16 via a network 18 (indicated as a double-line guard barrier in dotted line format) may be conveyed using a first communication protocol. Communications by web server 26 via network 18 may be conveyed using a second communication protocol. A problem may be presented when network 18 does not support at least one of the first communication protocol and the second communication protocol. When such a mismatching of communication protocols may be present, communications may not occur via network 18, as indicated at a locus 19.

By way of example and not by way of limitation, access to a web service, such as web service 20, by a client application, such as client application 10, may be effected using Simple Object Access Protocol (SOAP) messages that traverse a network using Hypertext Transfer Protocol (HTTP). However, a network environment such as network 18 may not accommodate HTTP throughout, so that HTTP may not completely convey communications between client application 10 and web service 20. In such non-HTTP network environments a message protocol translation may be required in order to support fully trans-network communications between client application 10 and web service 20.

FIG. 2 is a schematic diagram of an arrangement for communication between a client application and a web service via a network using the apparatus of the present disclosure. In FIG. 2, a first entity may include a client application 10. Client application 10 may include a client unit 14 in communicative relation with a client stub 16. Client stub 16 may operate as a first interface unit for client unit 14 to effect communications using a first communication protocol. By way of example and not by way of limitation, client stub 16 may communicate with client unit 14 using function calls, and client stub 16 may communicate with entities external of client application 10 using Simple Object Access Protocol (SOAP) messages.

A second entity may include a web service 20. Web service 20 may include a web service 24 in communicative relation with a web server 26. Web server 26 may operate as a second interface unit for web service 24 to effect communications using a second communication protocol. By way of example and not by way of limitation, web server 26 may communicate with web service 24 using function calls, and web server 26 may communicate with entities external of web service 20 using SOAP messages. Communications by client stub 16 may be conveyed using a first communication protocol. Communications by web server 26 may be conveyed using a second communication protocol.

A first converting element that may be configured as a web service proxy 30 may be coupled with client application 10. Web service proxy 30 may be co-located with client application 10 in a first domain 12. Web service proxy 30 may generally emulate the cooperative relation between web service 24 and web server 26 to effect converting communications originating from client unit 14 into a common communication protocol for communications via network 18. Web service proxy 30 may include a service skeleton 34 and a replica web server unit 36. Service skeleton 34 may perform as a web server emulating unit and may be created to accommodate alteration of information or filling-in of information by a client developer to assure substantial emulation of web service 24. Replica web server 36 may substantially emulate web server 26. Service skeleton 34 and replica web server 36 may cooperate to effect converting communications received from client stub 16 into a common communication protocol.

A second converting element that may be configured as a stub client unit 40 may be coupled with web service 20. Stub client unit 40 may be co-located with web service 20 in a second domain 22. Stub client unit 40 may generally emulate the cooperative relation between client unit 14 and client stub 16 to effect converting communications originating from web service 24 into a common communication protocol for communications via network 18. Stub client unit 40 may include a client proxy unit 44 and a client proxy stub unit 46. Client proxy unit 44 may be created to substantially emulate client unit 14. Client proxy stub unit 46 may substantially emulate client stub 16. Client proxy unit 44 and client proxy stub unit 46 may cooperate to effect converting communications received from web server 26 into the common communication protocol. The common communication protocol may be either the first communication protocol used by client stub 16, the second communication protocol used by web server 26 or a third communication protocol so long as the common communication protocol enables trans-network communications across network 18 by web service proxy 30 and stub client unit 40 between first domain 12 and second domain 22.

By way of example and not by way of limitation, to bridge protocols a web service proxy 30 and associated stub client proxy 40 may be employed. Web service proxy 30 may be configured using a web application server 36 and a service skeleton 34. Client applications 14 may interact with web service proxy 30 as though it were the originating web service 20. The disclosure offloads the work of managing client application connections and intercepting and parsing the SOAP message to web application server 36. When web application server 36 receives a SOAP message it translates the message into an appropriate function call implemented by service skeleton 34. This function call may be translated by service skeleton 34 into the appropriate message format (common communications protocol) and passed on. The message may be ultimately received by stub client proxy 44 which then may interact with originating web service 20. Results of SOAP transfer coming from original web service 20 to stub client 40 may be passed back to service skeleton 34. Service skeleton 34 may return the results to web application server 36. Web application server 36 may create a SOAP response to send back to client application 10.

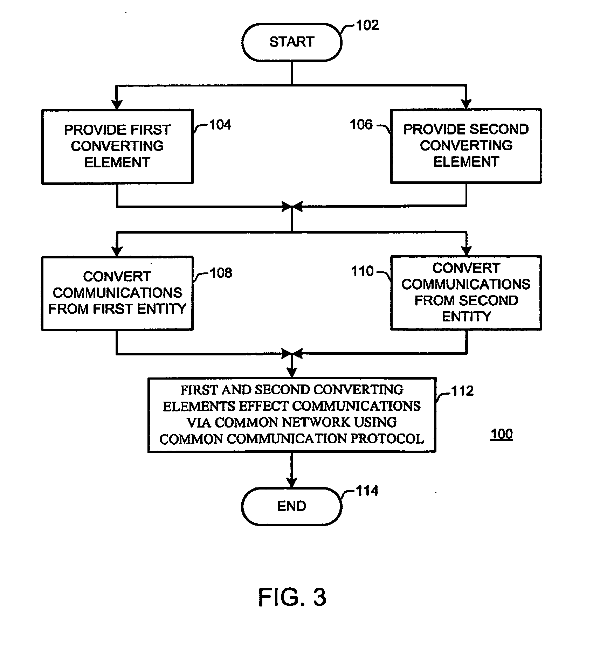

FIG. 3 is a flow chart illustrating the method of the present disclosure. In FIG. 3, a method 100 for facilitating communications between a first entity and a second entity via a common network may begin at a START locus 102. The first entity may cooperate with a first interface unit to effect communication with the common network using a first communication protocol. The second entity may cooperate with a second interface unit to effect communication with the common network using a second communication protocol. The common network may not support communications carried out using at least one of the first communication protocol and the second communication protocol.

Method 100 may continue with, in no particular order: (1) Providing a first converting element coupled with the first entity, as indicated by a block 104. The first converting element may be configured for generally emulating the cooperative relation between the second entity and the second interface unit. (2) Providing a second converting element coupled with the second entity, as indicated by a block 106. The second converting element may be configured for generally emulating the cooperative relation between the first entity and the first interface unit.

Method 100 may continue with, in no particular order: (1) Effecting conversion of communications from the first entity into a common communication protocol, as indicated by a block 108. (2) Effecting conversion of communications from the second entity into the common communication protocol, as indicated by a block 110.

Method 100 may continue with effecting communication between the first converting element and the second converting element via the common network using the common communication protocol, as indicated by a block 112. Method 100 may terminate at an END locus 114.

It is to be understood that, while the detailed drawings and specific examples given describe preferred embodiments of the disclosure, they are for the purpose of illustration only, that the apparatus and method of the disclosure are not limited to the precise details and conditions disclosed and that various changes may be made therein without departing from the disclosure which is defined by the following claims:

## Claims

1. An apparatus to facilitate communications between a first entity (14) and a second entity (24) via a common network (18); said first entity (14) cooperating with a first interface unit (16) to effect communication with said common network (18) using a first communication protocol; said second entity (24) cooperating with a second interface unit (26) to effect communication with said common network (18) using a second communication protocol; said common network (18) not supporting communications carried out using at least one of said first communication protocol and said second communication protocol; the apparatus comprising:
(a) a first converting element (30) coupled with said first entity (14); said first converting element (30) emulating said cooperative relation between said second entity (24) and said second interface unit (26) to effect converting communications from said first entity (14) into a common communication protocol, and including a replica second interface unit (36) emulating the second interface unit (26), thereby enabling the first entity (14) to interact with the first converting element (30) as though the first converting element (30) were the second entity (24) and the second interface unit (26); and
(b) a second converting element (40) coupled with said second entity (24); said second converting element (40) emulating said cooperative relation between said first entity (14) and said first interface unit (16) to effect converting communications from said second entity (24) into said common communication protocol, and including a replica first interface unit (46) emulating the first interface unit (16);
said first converting element (30) and said second converting element (40) effecting communications via said common network (18) using said common communication protocol.

2. The apparatus to facilitate communications between a first entity (14) and a second entity (24) via a common network (18) as recited in Claim 1 wherein said second entity (24) is a web service.

3. The apparatus to facilitate communications between a first entity (14) and a second entity (24) via a common network (18) as recited in Claim 2 wherein said second interface unit (26) is a server unit coupled with said web service.

4. The apparatus to facilitate communications between a first entity (14) and a second entity (24) via a common network (18) as recited in Claim 1 wherein said first entity (14) is a client application.

5. The apparatus to facilitate communications between a first entity (14) and a second entity (24) via a common network (18) as recited in Claim 4 wherein said first interface unit (16) is a client stub unit coupled with said client application.

6. The apparatus to facilitate communications between a first entity (14) and a second entity (24) via a common network (18) as recited in Claim 3 wherein said first entity (14) is a client application.

7. The apparatus to facilitate communications between a first entity (14) and a second entity (24) via a common network (18) as recited in Claim 6 wherein said first interface unit (16) is a client stub unit coupled with said client application.

8. A method for facilitating communications between a first entity (14) and a second entity (24) via a common network (18); said first entity (14) cooperating with a first interface unit (16) to effect communication with said common network (18) using a first communication protocol; said second entity (24) cooperating with a second interface unit (26) to effect communication with said common network (18) using a second communication protocol; said common network (18) not supporting communications carried out using at least one of said first communication protocol and said second communication protocol; the method comprising:
(a) in no particular order:
(1) providing a first converting element (30) coupled with said first entity (14); said first converting element (30) being configured for emulating said cooperative relation between said second entity (24) and said second interface unit (26); said first converting element (30) including a replica second interface unit (36) emulating the second interface unit (26), thereby enabling the first entity (14) to interact with the first converting element (30) as though the first converting element (30) were the second entity (24) and the second interface unit (26); and
(2) providing a second converting element (40) coupled with said second entity (24); said second converting element (40) being configured for emulating said cooperative relation between said first entity (14) and said first interface unit (16); said second converting element (40) including a replica first interface unit (46) emulating the first interface unit (16);
(b) in no particular order:
(1) effecting conversion of communications from said first entity (14) into a common communication protocol; and
(2) effecting conversion of communications from said second entity (24) into said common communication protocol; and
(c) effecting communication between said first converting element (30) and said second converting element (40) via said common network (18) using said common communication protocol.

9. The method for facilitating communications between a first entity (14) and a second entity (24) via a common network (18) as recited in Claim 8 wherein said second entity (24) is a web service.

10. The method for facilitating communications between a first entity (14) and a second entity (24) via a common network (18) as recited in Claim 9 wherein said second interface unit (26) is a server unit coupled with said web service.

11. The method for facilitating communications between a first entity (14) and a second entity (24) via a common network (18) as recited in Claim 8 wherein said first entity (14) is a client application.

12. The method for facilitating communications between a first entity (14) and a second entity (24) via a common network (18) as recited in Claim 11 wherein said first interface unit (16) is a client stub unit coupled with said client application.

13. The method for facilitating communications between a first entity (14) and a second entity (24) via a common network (18) as recited in Claim 10 wherein said first entity (14) is a client application, and wherein said first interface unit (16) is a client stub unit coupled with said client application.

## Patentansprüche

1. Vorrichtung zum Ermöglichen von Kommunikation zwischen einer ersten Instanz (14) und einer zweiten Instanz (24) über ein gemeinsames Netzwerk (18), wobei die erste Instanz (14) mit einer ersten Schnittstelleneinheit (16) zusammenarbeitet, um Kommunikation mit dem gemeinsamen Netzwerk (18) unter Verwendung eines ersten Kommunikationsprotokolls zu bewirken; wobei die zweite Instanz (24) mit einer zweiten Schnittstelleneinheit (26) zusammenarbeitet, um Kommunikation mit dem gemeinsamen Netzwerk (18) unter Verwendung eines zweiten Kommunikationsprotokolls zu bewirken; wobei das gemeinsame Netzwerk (18) unter Verwendung von wenigstens einem von dem ersten Kommunikationsprotokoll und dem zweiten Kommunikationsprotokoll ausgeführte Kommunikation nicht unterstützt, wobei die Vorrichtung aufweist:
(a) ein mit der ersten Instanz (14) verbundenes erstes Umwandlungselement (30), wobei das erste Umwandlungselement (30) die Zusammenarbeitsbeziehung zwischen der zweiten Instanz (24) und der zweiten Schnittstelleneinheit (26) emuliert, um eine Umwandlung von Kommunikation aus der ersten Instanz (14) in ein gemeinsames Kommunikationsprotokoll zu bewirken, und eine die zweite Schnittstelleneinheit (26) emulierende nachgebaute zweite Schnittstelleneinheit (36) enthält, um dadurch der ersten Instanz (14) zu ermöglichen, mit dem ersten Umwandlungselement (30) so in Wechselwirkung zu treten, als ob das erste Umwandlungselement (30) die zweite Instanz (24) und die zweite Schnittstelleneinheit (26) wäre; und
(b) ein mit der zweiten Instanz (24) verbundenes zweites Umwandlungselement (40), wobei das zweite Umwandlungselement (40) die Zusammenarbeitsbeziehung zwischen der ersten Instanz (14) und der ersten Schnittstelleneinheit (16) emuliert, um eine Umwandlung von Kommunikation aus der zweiten Instanz (24) in das gemeinsame Kommunikationsprotokoll zu bewirken, und eine die erste Schnittstelleneinheit (16) emulierende nachgebaute erste Schnittstelleneinheit (46) enthält;
wobei das erste Umwandlungselement (30) und das zweite Umwandlungselement (40) Kommunikation über das gemeinsame Netzwerk (18) unter Verwendung des gemeinsamen Kommunikationsprotokolls bewirken.

2. Vorrichtung, um Kommunikation zwischen einer ersten Instanz (14) und einer zweiten Instanz (24) über ein gemeinsames Netzwerk (18) gemäß Anspruch 1 zu ermöglichen, wobei die zweite Instanz (24) ein Netzdienst ist.

3. Vorrichtung, um Kommunikation zwischen einer ersten Instanz (14) und einer zweiten Instanz (24) über ein gemeinsames Netzwerk (18) gemäß Anspruch 2 zu ermöglichen, wobei die zweite Schnittstelleneinheit (24) eine mit dem Netzdienst verbundene Servereinheit ist.

4. Vorrichtung, um Kommunikation zwischen einer ersten Instanz (14) und einer zweiten Instanz (24) über ein gemeinsames Netzwerk (18) gemäß Anspruch 1 zu ermöglichen, wobei die erste Instanz (14) eine Client-Anwendung ist.

5. Vorrichtung, um Kommunikation zwischen einer ersten Instanz (14) und einer zweiten Instanz (24) über ein gemeinsames Netzwerk (18) gemäß Anspruch 4 zu ermöglichen, wobei die erste Schnittstelleneinheit (16) eine mit der Client-Anwendung verbundene Client-Rumpfeinheit (client stub unit) ist.

6. Vorrichtung, um Kommunikation zwischen einer ersten Instanz (14) und einer zweiten Instanz (24) über ein gemeinsames Netzwerk (18) gemäß Anspruch 3 zu ermöglichen, wobei die erste Instanz (14) eine Client-Anwendung ist.

7. Vorrichtung, um Kommunikation zwischen einer ersten Instanz (14) und einer zweiten Instanz (24) über ein gemeinsames Netzwerk (18) gemäß Anspruch 6 zu ermöglichen, wobei die erste Schnittstelleneinheit (16) eine mit der Client-Anwendung verbundene Client-Rumpfeinheit (client stub unit) ist.

8. Verfahren zum Ermöglichen von Kommunikation zwischen einer ersten Instanz (14) und einer zweiten Instanz (24) über ein gemeinsames Netzwerk (18), wobei die erste Instanz (14) mit einer ersten Schnittstelleneinheit (16) zusammenarbeitet, um Kommunikation mit dem gemeinsamen Netzwerk (18) unter Verwendung eines ersten Kommunikationsprotokolls zu bewirken, wobei die zweite Instanz (24) mit einer zweiten Schnittstelleneinheit (26) zusammenarbeitet, um Kommunikation mit dem gemeinsamen Netzwerk (18) unter Verwendung eines zweiten Kommunikationsprotokolls zu bewirken, wobei das gemeinsame Netzwerk (18) unter Verwendung von wenigstens einem von dem ersten Kommunikationsprotokoll und dem zweiten Kommunikationsprotokoll ausgeführte Kommunikation nicht unterstützt; wobei das Verfahren die Schritte aufweist:
(a) in keiner speziellen Reihenfolge:
(1) Bereitstellen eines mit der ersten Instanz (14) verbundenen ersten Umwandlungselementes (30); wobei das erste Umwandlungselement (30) dafür eingerichtet ist, die Zusammenarbeitsbeziehung zwischen der zweiten Instanz (24) und der zweiten Schnittstelleneinheit (26) zu emulieren, wobei das erste Umwandlungselement (30) eine die zweite Schnittstelleneinheit (26) emulierende nachgebaute zweite Schnittstelleneinheit (36) enthält, um dadurch der ersten Instanz (14) zu ermöglichen, mit dem ersten Umwandlungselement (30) so in Wechselwirkung zu treten, als ob das erste Umwandlungselement (30) die zweite Instanz (24) und die zweite Schnittstelleneinheit (26) wäre; und
(2) Bereitstellen eines mit der zweiten Instanz (24) verbundenen zweiten Umwandlungselements (40); wobei das zweite Umwandlungselement (40) dafür eingerichtet ist, die Zusammenarbeitsbeziehung zwischen der ersten Instanz (14) und der ersten Schnittstelleneinheit (16) zu emulieren, wobei das zweite Umwandlungselement (40) eine die erste Schnittstelleneinheit (16) emulierende nachgebaute erste Schnittstelleneinheit (46) enthält;
(b) in keiner speziellen Reihenfolge:
Bewirken einer Umwandlung von Kommunikation aus der ersten Instanz (14) in ein gemeinsames Kommunikationsprotokoll; und
Bewirken einer Umwandlung von Kommunikation aus der zweiten Instanz (24) in das gemeinsame Kommunikationsprotokoll; und
(c) Bewirken von Kommunikation zwischen dem ersten Umwandlungselement (30) und dem zweiten Umwandlungselement (40) über das gemeinsame Netzwerk (18) unter Verwendung des gemeinsamen Kommunikationsprotokolls.

9. Verfahren, um Kommunikation zwischen einer ersten Instanz (14) und einer zweiten Instanz (24) über ein gemeinsames Netzwerk (18) gemäß Anspruch 8 zu ermöglichen, wobei die zweite Instanz (24) ein Netzdienst ist.

10. Verfahren, um Kommunikation zwischen einer ersten Instanz (14) und einer zweiten Instanz (24) über ein gemeinsames Netzwerk (18) gemäß Anspruch 9 zu ermöglichen, wobei die zweite Schnittstelleneinheit (24) eine mit dem Netzdienst verbundene Servereinheit ist.

11. Verfahren, um Kommunikation zwischen einer ersten Instanz (14) und einer zweiten Instanz (24) über ein gemeinsames Netzwerk (18) gemäß Anspruch 8 zu ermöglichen, wobei die erste Instanz (14) eine Client-Anwendung ist.

12. Verfahren, um Kommunikation zwischen einer ersten Instanz (14) und einer zweiten Instanz (24) über ein gemeinsames Netzwerk (18) gemäß Anspruch 11 zu ermöglichen, wobei die erste Schnittstelleneinheit eine mit der Client-Anwendung verbundene Client-Rumpfeinheit (client stub unit) ist.

13. Verfahren, um Kommunikation zwischen einer ersten Instanz (14) und einer zweiten Instanz (24) über ein gemeinsames Netzwerk (18) gemäß Anspruch 10 zu ermöglichen, wobei die erste Instanz (14) eine Client-Anwendung ist, und wobei die erste Schnittstelleneinheit (16) eine mit der Client-Anwendung verbundene Client-Rumpfeinheit (client stub unit) ist.

## Revendications

1. Appareil pour faciliter des communications entre une première entité (14) et une seconde entité (24) par l'intermédiaire d'un réseau commun (18) ; ladite première entité (14) coopérant avec une première unité d'interface (16) pour effectuer une communication avec ledit réseau commun (18) en utilisant un premier protocole de communication ; ladite seconde entité (24) coopérant avec une seconde unité d'interface (26) pour effectuer une communication avec ledit réseau commun (18) en utilisant un second protocole de communication ; ledit réseau commun (18) ne supportant pas des communications réalisées en utilisant au moins un parmi ledit premier protocole de communication et ledit second protocole de communication ; l'appareil comprenant :
(a) un premier élément de conversion (30) couplé avec ladite première entité (14) ; ledit premier élément de conversion (30) émulant ladite relation coopérative entre ladite seconde entité (24) et ladite seconde unité d'interface (26) pour effectuer des communications de conversion à partir de ladite première entité (14) en un protocole de communication commun, et comprenant une seconde unité d'interface de réplique (36) émulant la seconde unité d'interface (26), permettant ainsi à la première entité (14) d'interagir avec le premier élément de conversion (30) comme si le premier élément de conversion (30) était la seconde entité (24) et la seconde unité d'interface (26) ; et
(b) un second élément de conversion (40) couplé avec ladite seconde entité (24) ; ledit second élément de conversion (40) émulant ladite relation coopérative entre ladite première entité (14) et ladite première unité d'interface (16) pour effectuer des communications de conversion à partir de ladite seconde entité (24) en ledit protocole de communication commun, et comprenant une première unité d'interface de réplique (46) émulant la première unité d'interface (16) ;
ledit premier élément de conversion (30) et ledit second élément de conversion (40) effectuant des communications par l'intermédiaire dudit réseau commun (18) en utilisant ledit protocole de communication commun.

2. Appareil pour faciliter des communications entre une première entité (14) et une seconde entité (24) par l'intermédiaire d'un réseau commun (18) selon la revendication 1, dans lequel ladite seconde entité (24) est un service Web.

3. Appareil pour faciliter des communications entre une première entité (14) et une seconde entité (24) par l'intermédiaire d'un réseau commun (18) selon la revendication 2, dans lequel ladite seconde unité d'interface (26) est une unité de serveur couplée avec ledit service Web.

4. Appareil pour faciliter des communications entre une première entité (14) et une seconde entité (24) par l'intermédiaire d'un réseau commun (18) selon la revendication 1, dans lequel ladite première entité (14) est une application client.

5. Appareil pour faciliter des communications entre une première entité (14) et une seconde entité (24) par l'intermédiaire d'un réseau commun (18) selon la revendication 4, dans lequel ladite première unité d'interface (16) est une unité souche client couplée avec ladite application client.

6. Appareil pour faciliter des communications entre une première entité (14) et une seconde entité (24) par l'intermédiaire d'un réseau commun (18) selon la revendication 3, dans lequel ladite première entité (14) est une application client.

7. Appareil pour faciliter des communications entre une première entité (14) et une seconde entité (24) par l'intermédiaire d'un réseau commun (18) selon la revendication 6, dans lequel ladite première unité d'interface (16) est une unité souche client couplée avec ladite application client.

8. Procédé pour faciliter des communications entre une première entité (14) et une seconde entité (24) par l'intermédiaire d'un réseau commun (18) ; ladite première entité (14) coopérant avec une première unité d'interface (16) pour effectuer une communication avec ledit réseau commun (18) en utilisant un premier protocole de communication ; ladite seconde entité (24) coopérant avec une seconde unité d'interface (26) pour effectuer une communication avec ledit réseau commun (18) en utilisant un second protocole de communication ; ledit réseau commun (18) ne supportant pas des communications réalisées en utilisant au moins un parmi ledit premier protocole de communication et ledit second protocole de communication ; le procédé comprenant :
(a) sans ordre particulier :
(1) la fourniture d'un premier élément de conversion (30) couplé avec ladite première entité (14) ; ledit premier élément de conversion (30) étant configuré pour émuler ladite relation coopérative entre ladite seconde entité (24) et ladite seconde unité d'interface (26) ; ledit premier élément de conversion (30) comprenant une seconde unité d'interface de réplique (36) émulant la seconde unité d'interface (26), permettant ainsi à la première entité (14) d'interagir avec le premier élément de conversion (30) comme si le premier élément de conversion (30) était la seconde entité (24) et la seconde unité d'interface (26) ; et
(2) la fourniture d'un second élément de conversion (40) couplé avec ladite seconde entité (24) ; ledit second élément de conversion (40) étant configuré pour émuler ladite relation coopérative entre ladite première entité (14) et ladite première unité d'interface (16) ; ledit second élément de conversion (40) comprenant une première unité d'interface de réplique (46) émulant la première unité d'interface (16) ;
(b) sans ordre particulier :
(1) l'exécution d'une conversion de communications à partir de ladite première entité (14) en un protocole de communication commun ; et
(2) l'exécution d'une conversion de communications à partir de ladite seconde entité (24) en ledit protocole de communication commun ; et
(c) l'exécution d'une communication entre ledit premier élément de conversion (30) et ledit second élément de conversion (40) par l'intermédiaire dudit réseau commun (18) en utilisant ledit protocole de communication commun.

9. Procédé pour faciliter des communications entre une première entité (14) et une seconde entité (24) par l'intermédiaire d'un réseau commun (18) selon la revendication 8, dans lequel ladite seconde entité (24) est un service Web.

10. Procédé pour faciliter des communications entre une première entité (14) et une seconde entité (24) par l'intermédiaire d'un réseau commun (18) selon la revendication 9, dans lequel ladite seconde unité d'interface (26) est une unité de serveur couplée avec ledit service Web.

11. Procédé pour faciliter des communications entre une première entité (14) et une seconde entité (24) par l'intermédiaire d'un réseau commun (18) selon la revendication 8, dans lequel ladite première entité (14) est une application client.

12. Procédé pour faciliter des communications entre une première entité (14) et une seconde entité (24) par l'intermédiaire d'un réseau commun (18) selon la revendication 11, dans lequel ladite première unité d'interface (16) est une unité souche client couplée avec ladite application client.

13. Procédé pour faciliter des communications entre une première entité (14) et une seconde entité (24) par l'intermédiaire d'un réseau commun (18) selon la revendication 10, dans lequel ladite première entité (14) est une application client, et dans lequel ladite première unité d'interface (16) est une unité souche client couplée avec ladite application client.
